# EUROPÄISCHE PATENTSCHRIFT

(11) **EP 1 595 743 B1**
(45) Veröffentlichungstag und Bekanntmachung des Hinweises auf die Patenterteilung: **02.05.2007**
(21) Anmeldenummer: 05009731.0
(22) Anmeldetag: 03.05.2005
(51) Int. Cl.: B60R 1/06

(54) **Spiegelfuß zur Befestigung einer Spiegelanordnung auf einer leicht unebenen Montagefläche, insbesondere zur Befestigung von Außenspiegeln an Fahrzeugkarosserien sowie Spiegelanordnung mit einem solchen Spiegelfuß**
Foot for fastening a mirror, in particular for a vehicle wing mirror, and mirror with such a foot
Pied de support pour mirroir, en particulier pour le support d'un rétroviseur extérieur de véhicule, et dispositif de mirroir avec ce pied

(30) Priorität: 10.05.2004 DE 202004007411 U
(43) Veröffentlichungstag der Anmeldung: 16.11.2005
(73) Patentinhaber: MEKRA Lang GmbH & Co. KG, 90765 Fürth (DE)
(72) Erfinder: Lang, Heinrich, 91465 Ergersheim (DE); Centmayer, Stefan, 91465 Ergersheim (DE); Snel, Jaap-Jan, 91465 Ergersheim (DE); Seiboth, Wolfgang, 91438 Bad Windsheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- DE-A1- 4 227 171
- US-A- 4 998 814
- US-B1- 6 260 977

## Beschreibung

Die vorliegende Erfindung betrifft einen Spiegelfuß zur Befestigung einer Spiegelanordnung auf leicht unebenen Montageflächen, insbesondere zur Befestigung von Außenspiegeln an Fahrzeugkarosserien nach dem Oberbegriff des Anspruchs 1 sowie eine Spiegelanordnung mit einem solchen Spiegelfuß.

Außenspiegel an Kraftfahrzeugen bestehen aus einem Spiegelfuß, der mit der Karosserie des Kraftfahrzeugs verbunden ist und dem eigentlichen Spiegel bzw. Spiegelkopf, der an dem Spiegelfuß verstellbar befestigt ist. Der Spiegelfuß umfaßt eine Trägereinrichtung in Form einer Trägerplatte, die eine der Montagefläche zugewandte Montageseite und eine von der Montagefläche abgewandte Spiegelseite aufweist. Die Form der Montageseite ist dabei an die Kontur der Karosserie an der Montagestelle angepaßt. Ein Außenspiegel gemäß dem Stand der Technik ist aus dem Dokument DE-A-4 227 171 bekannt.

Häufig ist es wünschenswert, daß an bereits im Einsatz befindlichen Fahrzeugen zusätzliche Außenspiegel befestigt werden. Hierzu ist es notwendig, zumindest den Spiegelfuß an das jeweilige Fahrzeug bzw. an die Kontur der gewünschten Montagestelle an dem jeweiligen Fahrzeug anzupassen. Die verkompliziert und verteuert die Nachrüstung mit zusätzlichen Spiegeln.

Es ist daher Aufgabe der vorliegenden Erfindung einen Spiegelfuß sowie eine Spiegelanordnung mit einem solchen Spiegelfuß anzugeben, bei denen die Nachrüstung von Fahrzeugen mit zusätzlichen Spiegeln im Vergleich zum Stand der Technik vereinfacht.

Die Lösung dieser Aufgabe erfolgt durch die Merkmale des Anspruchs 1 bzw. 10.

Dadurch, daß auf der Montageseite der Trägereinrichtung wenigstens drei räumlich getrennt voneinander angeordnete Auflageelemente mit einer konvexen Auflagefläche vorgesehen sind, werden leichte Unebenheiten und leicht unterschiedliche Krümmungen der Karosserie an der Montagestelle ausgeglichen. Ein Wackeln des Spiegelfußes in montiertem Zustand wird dadurch verhindert. Durch die punktuelle Auflage auf der Montagestelle, läßt sich der gleiche Spiegelfuß an unterschiedlichen Fahrzeugen montieren. Ein derartiger Spiegelfuß ist als Universalspiegelfuß oder Universalspiegelhalter für unterschiedliche Fahrzeuge geeignet. Hierdurch wird die gewünschte Nachrüstung mit Zusatzspiegeln erheblich kostengünstiger. Zusätzlich wird durch den spielfreien Kontakt ein Zerkratzen der Lackoberfläche des Fahrzeugs verhindert.

Gemäß einer bevorzugten Ausführungsform der Erfindung nach Anspruch 2 mit einer kugelflächenförmigen Auflagefläche der Auflageelemente ergibt sich eine vergrößerte Auflagefläche, die trotzdem einen Ausgleich von leichten Unebenheiten ermöglicht.

Gemäß einer vorteilhaften Ausgestaltung der Erfindung nach Anspruch 3 weisen die Auflageelemente den gleichen Krümmungsradius auf, wodurch die Herstellung vereinfacht und die Krafteinleitung auf das Fahrzeug gleichmäßig verteilt erfolgt.

Gemäß einer vorteilhaften Ausgestaltung der Erfindung nach Anspruch 4 ist die Trägereinrichtung als Trägerplatte ausgebildet. Hierdurch ergibt sich eine geringe Bauhöhe in Richtung von dem Fahrzeug weg. Auf der Spiegelseite ist dennoch genügend Platz für die Montage des Spiegelkopfes vorhanden.

Die Ausgestaltung der Erfindung nach Anspruch 5 bedingt nur geringe Änderungen der Trägerplatte des erfindungsgemäßen Spiegelkopfes im Vergleich zu Spiegelköpfen nach dem Stand der Technik.

Durch die einstückige Ausbildung der Trägerplatte nach Anspruch 6 wird die Kompaktheit und Stabilität positiv beeinflußt.

Den gleichen Vorteil bietet auch die Ausführungsform nach Anspruch 7.

Gemäß der bevorzugten Ausgestaltung der Erfindung nach Anspruch 8 sind vier Auflageelemente vorgesehen, die vorzugsweise in den abgerundeten Ecken (Anspruch 9) der in etwa rechteckförmigen Trägerplatte angeordnet sind. Durch die aus Stabilitätsgründen an sich nachteiligen Anzahl von vier Auflageelementen wird in Verbindung mit einem nicht ganz verwindungssteifen Material für die Trägerplatte dennoch eine wackelfreie Anordnung erreicht, bei der die Kräfte gleichmäßig von dem Spiegel auf das Fahrzeug übertragen werden.

Weitere Einzelheiten, Merkmale und Vorteile der Erfindung ergeben sich aus der nachfolgenden einer beispielhaften Ausführungsform der Erfindung.

Es zeigt:
- Fig. 1: eine perspektivische Darstellung der Trägerplatte einer ersten Ausführungsform der Erfindung;
- Fig. 2: eine Aufsicht auf die Montageseite einer Trägerplatte gemäß einer zweiten Ausführungsform, und
- Fig. 3: eine Seitenansicht der Trägerplatte nach Fig. 2.

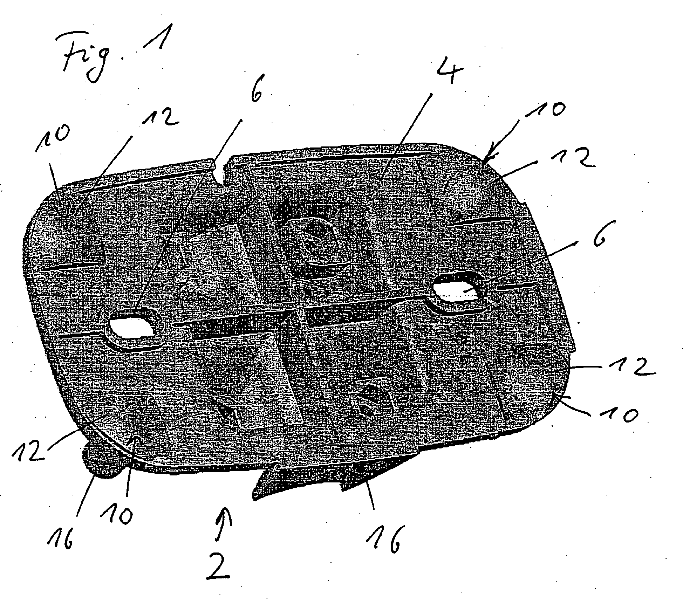

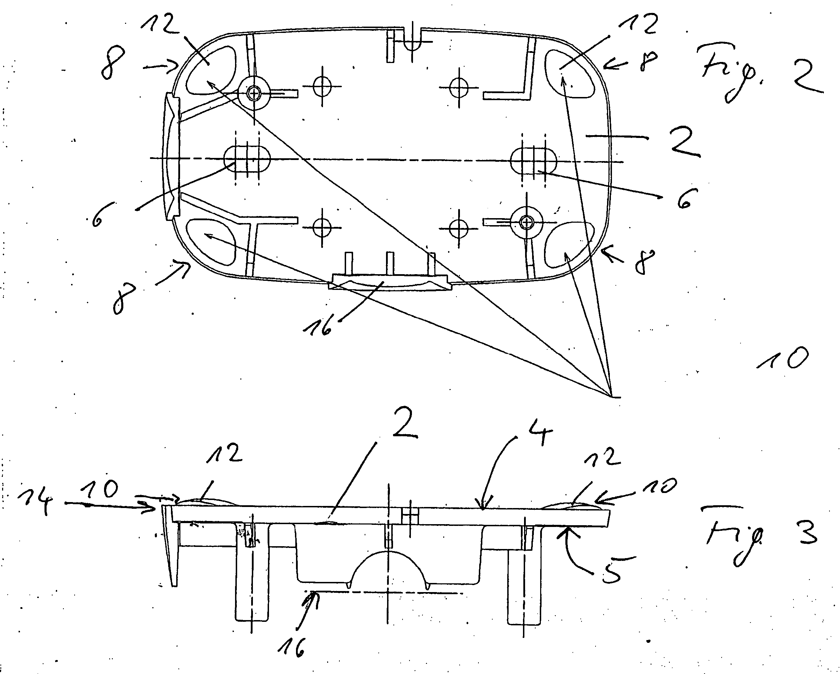

Die Figuren 1 bis 3 zeigen eine zwei beispielhafte Ausführungsformen der Erfindung, genauer der wesentlichen Komponente eines Spiegelfußes, nämlich eine Trägereinrichtung in Form einer Trägerplatte 2. Die beiden Ausführungsformen stimmen im wesentlichen überein und unterscheiden sich lediglich hinsichtlich der Form und Anordnung einzelner Elemente. Die nachfolgenden Erläuterungen beziehen sich daher auf beide Ausführungsformen.

Die Trägerplatte 2 ist einstückig ausgebildet und besteht aus Kunststoff. Die Trägerplatte 2 weist eine Montageseite 4 und eine Spiegelseite 5 auf. Die Montageseite 4 kommt auf dem Fahrzeug, das mit einem Spiegel nachgerüstet werden soll zu liegen. Die Trägerplatte 2 wird mit nicht näher dargestellten Befestigungsmitteln an der Montagestelle mit dem Fahrzeug verbunden. Die Befestigungsmittel greifen hierbei in Aufnahmen 6 ein, die in die Trägerplatte 2 integriert sind.

Die Trägerplatte 2 besitzt eine rechteckige Grundform mit abgerundeten Ecken 8. Im Bereich dieser gerundeten Ecken 8 sind vier Auflagelemente 10 auf der Montageseite 4 angeordnet. Die Auflageelemente 10 weisen eine konvexe, kugleflächenförmige Auflagefläche 12 auf. Wie insbesondere aus Fig. 3 zu ersehen ist spannt die Montageseite 4 eine Ebene 14 auf, über die die Auflageelemente 10 bzw. deren Auflagefläche 12 hinausragt. Auf der Spiegelseite 5 sind Elemente 16 zur Befestigung des Spiegelkopfes vorgesehen.

Bei der Montage der Trägerplatte 2 an einer Fahrzeugkarosserie, die leichte Unebenheiten aufweist, verwindet sich die Trägerplatte 2 etwas, so daß alle vier Auflageflächen 12 gleichmäßigen Kontakt mit der Montagestelle auf der Fahrzeugkarosserie haben.

### Bezugszeichenliste:

- 2: Trägereinrichtung, Trägerplatte
- 4: Montageseite
- 5: Spiegelseite
- 6: Aufnahmen für Befestigungsmittel
- 8: abgerundete Ecken von 2
- 10: Auflageelemente
- 12: Auflagefläche
- 14: Ebene der Montageseite
- 16: Elemente zur Befestigung des Spiegelkopfes

## Patentansprüche

1. Spiegelfuß zur Befestigung einer Spiegelanordnung auf leicht unebenen Montageflächen, insbesondere zur Befestigung von Außenspiegeln an Fahrzeugkarosserien, mit
einer Tragereinrichtung (2), die eine der Montagefläche zugewandte Montageseite (4) und eine von der Montagefläche abgewandte Spiegelseite (5) aufweist,
**dadurch gekennzeichnet,**
**daß** auf der Montageseite (4) der Trägereinrichtung (2) wenigstens drei Auflageelemente (10) mit einer konvexen Auflagefläche (12) vorgesehen sind.

2. Spiegelfuß nach Anspruch 1, **dadurch gekennzeichnet, daß** die Auflagefläche (12) der Auflagelemente (10) kugelflächenförmig ist.

3. Spiegelfuß nach Anspruch 2, **dadurch gekennzeichnet, daß** die kugelflächenförmigen Auflageflächen (12) der wenigstens drei Auflageelemente den gleichen Krümmungsradius aufweisen.

4. Spiegelfuß nach einem der vorhergehenden Ansprüche, **dadurch gekennzeichnet, daß** die Trägereinrichtung eine Trägerplatte (2) ist.

5. Spiegelfuß nach einem der vorhergehenden Ansprüche, **dadurch gekennzeichnet, daß** die Montageseite (4) der Trägereinrichtung (2) eine Ebene (14) aufspannt und daß die konvexen Auflageelemente (10) aus dieser Ebene (14) herausragen.

6. Spiegelfuß nach einem der vorhergehenden Ansprüche, **dadurch gekennzeichnet, daß** die Trägereinrichtung (2) einstückig ausgebildet ist.

7. Spiegelfuß nach einem der vorhergehenden Ansprüche, **dadurch gekennzeichnet, daß** in die Trägereinrichtung (2) Elemente (6) zur Aufnahme von Befestigungsmitteln integriert sind.

8. Spiegelfuß nach einem der vorhergehenden Ansprüche, **dadurch gekennzeichnet,**
**daß** die Trägereinrichtung (2) aus einem nicht verwindungssteifen Material, insbesondere aus Kunststoff besteht,
**daß** die Montageseite (4) der Trägereinrichtung (2) die Grundform eines Rechtecks, insbesondere mit abgerundeten Ecken (8), besitzt, und
**daß** vier Auflagelelemente (10) vorgesehen sind.

9. Spiegelfuß nach Anspruch 8, **dadurch gekennzeichnet, daß** die vier Auflageelemente (10) im Bereich der abgerundeten Ecken (8) angeordnet sind.

10. Spiegelanordnung, insbesondere Außenspiegelanordnung für Nutzfahrzeuge, mit einem Spiegelkopf mit wenigstens einem Spiegelelement, wobei der Spiegelkopf mittels einem Spiegelfuß an einem Fahrzeug befestigbar ist, **dadurch gekennzeichnet, daß** der Spiegelfuß ein Spiegelfuß nach einem der vorhergehenden Ansprüche ist.

## Claims

1. Mirror base for securing a mirror assembly to slightly uneven mounting surfaces, in particular for securing exterior mirrors to vehicle bodies, comprising
a support unit (2) with a mounting side (4) facing the mounting surface and a mirror side (5) remote from the mounting surface,
**characterised in that**
at least three mounting elements (10) with a convex mounting surface (12) are provided on the mounting side (4) of the support unit (2).

2. Mirror base as claimed in claim 1, **characterised in that** the mounting surface (12) of the mounting elements (10) has a spherically shaped surface.

3. Mirror base as claimed in claim 2, **characterised in that** the spherically shaped surfaces of the mounting surfaces (12) of the at least three mounting elements have the same radius of curvature.

4. Mirror base as claimed in one of the preceding claims, **characterised in that** the support unit is a support plate (2).

5. Mirror base as claimed in one of the preceding claims, **characterised in that** the mounting side (4) of the support unit (2) spans a plane (14) and the convex mounting elements (10) project out from this plane (14).

6. Mirror base as claimed in one of the preceding claims, **characterised in that** the support unit (2) is of an integral design.

7. Mirror base as claimed in one of the preceding claims, **characterised in that** elements (6) for accommodating fixing means are integrated in the support unit (2).

8. Mirror base as claimed in one of the preceding claims, **characterised in that**
the support unit (2) is made from a material that is not torsionally rigid, in particular from plastic material,
the mounting side (4) of the support unit (2) has the basic shape of a rectangle, in particular with rounded corners (8), and
four mounting elements (10) are provided.

9. Mirror base as claimed in claim 8, **characterised in that** the four mounting elements (10) are disposed in the region of the rounded corners (8).

10. Mirror assembly, in particular an exterior mirror assembly for utility vehicles, with a mirror head with at least one mirror element, which mirror head can be secured to a vehicle by means of a mirror base, **characterised in that** the mirror base is a mirror base as claimed in one of the preceding claims.

## Revendications

1. Pied de miroir pour la fixation d'un agencement de miroir sur des surfaces de montage légèrement inégales, en particulier pour la fixation de rétroviseurs extérieurs sur des carrosseries de véhicule, comprenant
un dispositif de support (2) qui présente un côté miroir (4) tourné vers la surface de montage et un côté miroir (5) opposé à la surface de montage,
**caractérisé en ce**
**que**, du côté montage (4) du dispositif de support (2), il est prévu au moins trois éléments d'appui (10) avec une surface d'appui convexe (12).

2. Pied de miroir selon la revendication 1, **caractérisé en ce que** la surface d'appui (12) des éléments d'appui (10) est en forme de surface sphérique.

3. Pied de miroir selon la revendication 2, **caractérisé en ce que** les surfaces d'appui en forme de surface sphérique (12) des au moins trois éléments d'appui présentent le même rayon de courbure.

4. Pied de miroir selon l'une quelconque des revendications précédentes, **caractérisé en ce que** le dispositif de support est une plaque de support (2).

5. Pied de miroir selon l'une quelconque des revendications précédentes, **caractérisé en ce que** le côté montage (4) du dispositif de support (2) forme un plan (14) et que les éléments d'appui convexes (10) dépassent de ce plan (14).

6. Pied de miroir selon l'une quelconque des revendications précédentes, **caractérisé en ce que** le dispositif de support (2) est formé d'une seule pièce.

7. Pied de miroir selon l'une quelconque des revendications précédentes, **caractérisé en ce que** des éléments (6) destinés à recevoir des moyens de fixation sont intégrés dans le dispositif de support (2).

8. Pied de miroir selon l'une quelconque des revendications précédentes,
**caractérisé en ce que** le dispositif de support (2) est réalisé dans un matériau ne résistant pas à la torsion, en particulier en matière plastique,
**en ce que** le côté montage (4) du dispositif de support (2) possède la forme de base d'un rectangle, en particulier avec des angles arrondis (8),
et **en ce que** quatre éléments d'appui (10) sont prévus.

9. Pied de miroir selon la revendication 8, **caractérisé en ce que** les quatre éléments d'appui (10) sont disposés dans la zone des angles arrondis (8).

10. Agencement de miroir, en particulier agencement de rétroviseur extérieur pour véhicules utilitaires, comprenant une tête de miroir avec au moins un élément miroir, la tête de miroir pouvant être fixée sur un véhicule au moyen d'un pied de miroir, **caractérisé en ce que** le pied de miroir est un pied de miroir selon l'une quelconque des revendications précédentes.
